(19) Europäisches Patentamt
European Patent Office
Office européen des brevets

(11) **EP 1 431 963 B1**

(12) **EUROPEAN PATENT SPECIFICATION**

(45) Date of publication and mention
of the grant of the patent:
**05.09.2007 Bulletin 2007/36**

(51) Int Cl.:
***G10L 19/14*** *(2006.01)* ***G10L 19/02*** *(2006.01)*
***H04B 1/66*** *(2006.01)*

(21) Application number: **03257907.0**

(22) Date of filing: **16.12.2003**

(54) **Method and apparatus for encoding/decoding audio data with scalability**

Verfahren und Vorrichtung zur Codierung/Dekodierung von Audiodaten mit Skalierbarkeit

Procédé et dispositif pour le codage/décodage de données audios avec dimensionnabilité

(84) Designated Contracting States:
**DE FR GB NL**

(30) Priority: **16.12.2002 KR 2002080320**

(43) Date of publication of application:
**23.06.2004 Bulletin 2004/26**

(73) Proprietor: **SAMSUNG ELECTRONICS CO., LTD.
Suwon 442-742,
Gyeonggi-do (KR)**

(72) Inventors:
• **Kim, Jung-hoe**
**Gangseo-gu, Seoul (KR)**
• **Kim, Sang-wook**
**Seocho-gu, Seoul (KR)**
• **Oh, Eun-mi**
**Seocho-gu, Seoul (KR)**

(74) Representative: **Greene, Simon Kenneth
Elkington and Fife LLP
Prospect House
8 Pembroke Road
Sevenoaks,
Kent TN13 1XR (GB)**

(56) References cited:
**EP-A- 0 918 407**

• **PARK S-H ET AL: "MULTI-LAYER BIT-SLICED BIT-RATE SCALABLE AUDIO CODING" PREPRINTS OF PAPERS PRESENTED AT THE AES CONVENTION, XX, XX, vol. 103, page 16 XP009016481**
• **S-W KIM, R SPERSCHNEIDER, H PURNHAGEN, Y-B T KIM, J HERRE, M DIETZ, S HOTANI, T MORIYA, M NISHIGUCHI, T MLASKO, B GRILL: "ISO/IEC 14496-3 (MPEG-4 Audio) Amd.1 FPDAM Annex A (informative)" ISO/IEC JTC1/SC29/WG11 N2803, [Online] July 1999 (1999-07), pages 1-53, XP002273900 Vancouver, Canada Retrieved from the Internet: <URL:ftp: //ftp.tnt.uni-hannover.de/pub/MPE G/audio/ mpeg4/documents/w2803/w2803_i.pdf> [retrieved on 2004-03-12]**
• **DOBSON W K ET AL: "High quality low complexity scalable wavelet audio coding" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21 April 1997 (1997-04-21), pages 327-330, XP010226201 ISBN: 0-8186-7919-0**

**Description**

The present invention relates to coding and decoding audio data, and more particularly, to a method and apparatus for coding audio data so that a coded audio bitstream has a scalable bitrate, and a method and apparatus for decoding the audio data.

Due to recent developments in digital signal processing technology, audio signals are generally stored in most cases as digital data and reproduced. Digital audio storage/restoration apparatuses transform audio signals into pulse code modulation (PCM) audio data, i.e., digital signals, through sampling and quantization. By doing so, the digital audio storage/reproducing apparatus stores the PCM audio data in an information storage medium such as a compact disc (CD) and a digital versatile disc (DVD), and reproduces the stored signal in response to a user's command such that the user can listen to the audio data. The digital storage/restoration method greatly improves audio quality compared to analog methods using a long-playing (LP) record or magnetic tape, and dramatically reduces deterioration caused by a long storage period. However, the digital method has a problem in storage and transmission due to the large amount of digital data.

To solve this problem, a variety of compression methods are used to compress digital audio signals.

In Moving Pictures Expert Group (MPEG)/audio standardized by International Standard Organization (ISO), or AC-2/AC-3 developed by Dolby, the amount of data is reduced using psychoacoustic models. As a result, the amount of data can be efficiently reduced regardless of the characteristics of a signal. That is, the MPEG/audio standard or AC-2/AC-3 method can provide almost the same audio quality as that of a CD with a bitrate of only 64~384 Kbps, which is 1/6 to 1/8 of that of the previous digital encoding method.

In these methods, however, an optimal state suitable for a fixed bitrate is searched for and then quantization and encoding are performed. Accordingly, if the transmission bandwidth is lowered due to poor network conditions in transmitting bitstreams through the network, cut-offs may occur and appropriate services cannot be rendered to a user any more. In addition, when the bitstream is desired to be transformed into bitstreams of a smaller size more suitable for a mobile apparatus having a limited storage capacity, a re-encoding process should be performed in order to reduce the size of a bitstream, and the amount of computation required increases.

To solve this problem, the applicant of the present invention filed Korea Patent Application No. 97-61298 on Nov. 19, 1997 entitled "Bitrate Scalable Audio Encoding/Decoding Method and Apparatus Using Bit-Sliced Arithmetic Coding (BSAC)", for which a patent was granted on Apr. 17, 2000 with Korea Patent No. 261253. According to the BSAC technique, a bitstream coded with a high bitrate can be made into a bitstream with a low bitrate, and restoration is possible with only part of the bitstream. Accordingly, when the network is overloaded, or the performance of a decoder is poor, or a user requests a low bitrate, services with some degree of audio quality can be provided to the user by using only part of the bitstream, though the quality will inevitably decrease in proportion to the decrease in the bitrate.

However, since the BSAC technique adopts arithmetic coding, complexity is high, and when the BSAC technique is implemented in an actual apparatus, the cost increases. In addition, since the BSAC technique uses a modified discrete cosine transform (MDCT) for transformation of an audio signal, audio quality in a lower layer may severely deteriorate.

Sung-Hee Park et al, in "Multi-Layer Bit-Sliced Bit-Rate Scalable Audio Coding", Preprints of the AES Convention, October 1997, vol 103, pages 1 to 16, describe a coding method. A bit-sliced coding method is used for each of a plurality of layers. The coding method uses noiseless arithmetic coding on symbols formed from bits arranged on most significant bits through to least significant bits.

According to an aspect of the present invention, there is provided a method for coding audio data according to claim 1.

Before the coding of additional information, there may be further included obtaining a bit range allowed in each of the plurality of layers, wherein in the coding of the obtained plurality of quantized samples, the number of coded bits is counted, and if the number of counted bits exceeds a bit range corresponding to the bits, coding is stopped, and if the number of counted bits is less than the bit range corresponding to the bits even after quantized samples are all coded, bits that remain not coded after coding in a lower layer is finished are coded to the extent that the bit range permits.

The slicing of audio data preferably comprises: performing a wavelet transform of audio data; and slicing the wavelet-transformed data by referring to a cut-off frequency so that the sliced data corresponds to the plurality of layers.

According to another aspect of the present invention, there is provided a decoding method for decoding audio data according to claim 4.

In decoding audio data, a 4*K bit plane formed with decoded symbols is preferably obtained, and in obtaining quantized samples, K quantized samples are obtained from the 4*K bit plane, where K is an integer.

According to another aspect of the present invention, there is provided an apparatus for decoding audio data according to claim 5.

According to another aspect of the present invention, there is provided an apparatus for coding audio data according to claim 6.

The packing unit may count the number of coded bits and if the number of counted bits exceeds a bit range corresponding to the bits, stops the coding, and if the number of counted bits is less than the bit range corresponding to the bits even after quantized samples are all coded, codes bits that remain not coded after coding in a lower layer is finished, to the extent that the bit range permits.

The packing unit may slice the MDCT-transformed data by referring to a cut-off frequency so that the sliced data corresponds to the plurality of layers.

The present invention thus provides a method and apparatus for encoding/decoding audio data with scalability, by which fine grain scalability (FGS) is provided with lower complexity.

The above advantages of the present invention will become more apparent by describing in detail preferred embodiments thereof with reference to the attached drawings in which:

FIG. 1 is a block diagram of an encoding apparatus according to a preferred embodiment of the present invention;
FIG. 2 is a block diagram of a decoding apparatus according to a preferred embodiment of the present invention;
FIG. 3 is a diagram of the structure of a frame which forms a bitstream coded in a layered structure so that so that the bitrate can be controlled;
FIG. 4 is a detailed diagram of the structure of additional information;
FIG. 5 is a reference diagram to explain schematically an encoding method according to the present invention;
FIG. 6 is a reference diagram to explain more specifically an encoding method according to the present invention;
FIG. 7 is a flowchart for explaining an encoding method according to a preferred embodiment of the present invention;
FIG. 8 is a flowchart for explaining a decoding method according to a preferred embodiment of the present invention; and
FIG. 9 is a flowchart for explaining a decoding method according to another preferred embodiment of the present invention.

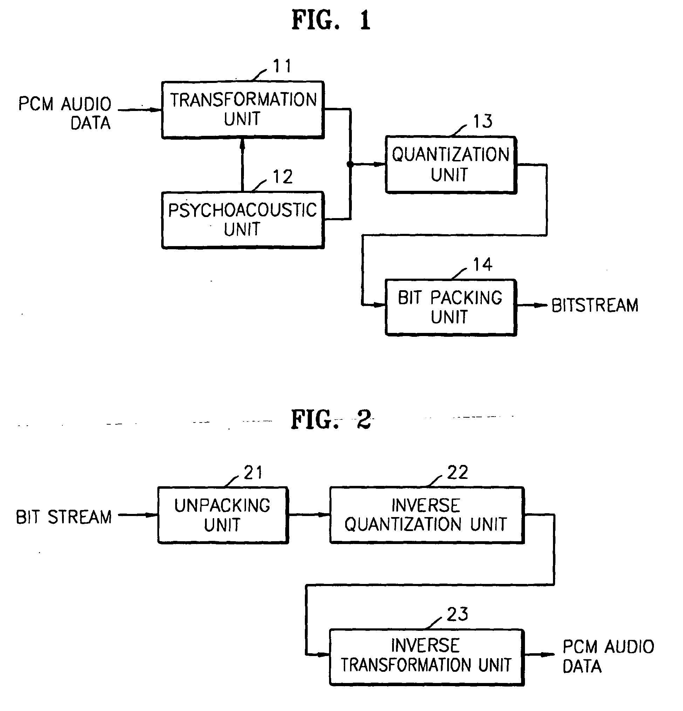

Referring to FIG. 1, an encoding apparatus codes audio data in a layered structure so that the bitrate of the coded bitstream can be controlled according to the present invention, and comprises a transformation unit 11, a psychoacoustic unit 12, a quantization unit 13, and a bit packing unit 14.

The transformation unit 11 receives pulse code modulation (PCM) audio data which is a time domain audio signal, and transforms the signal into a frequency domain signal, referring to information on a psychoacoustic model provided by the psychoacoustic unit 12. While the differences between the characteristics of audio signals that a human being can perceive are not so big in the time domain, there is a big difference between the characteristics of a signal that can be perceived by a human and a signal that cannot be perceived by a human in the frequency domain audio signals obtained through transformation. Accordingly, by differentiating the numbers of bits allocated to respective frequency bands, the efficiency of compression can be increased. In the present embodiment, the transformation unit 11 performs a modified discrete cosine transform (MDCT).

The psychoacoustic unit 12 provides information on a psychoacoustic model such as attack sensing information, to the transformation unit 11 and groups the audio signals transformed by the transformation unit 11 into signals of appropriate subbands. Also, the psychoacoustic unit 12 calculates a masking threshold in each subband by using a masking effect caused by interactions between respective signals, and provides the threshold values to the quantization unit 13. The masking threshold is the maximum value of a signal that cannot be perceived by a human due to the interaction between audio signals. In the present embodiment, the psychoacoustic unit 12 calculates masking thresholds of stereo components by using binaural masking level depression (BMLD).

The quantization unit 13 scalar-quantizes an audio signal in each band, based on scale factor information corresponding to the audio signal, so that the size of quantization noise in the band is less than the masking threshold provided by the psychoacoustic unit 12 so that a human cannot perceive the noise. Then, the quantization unit 13 outputs the quantized samples. That is, by using the masking threshold calculated in the psychoacoustic unit 12 and a noise-to-mask ratio (NMR) that is the ratio of a noise generated in each band, the quantization unit 13 performs quantization so that NMR values are 0 dB or less in the entire bands. The NMR values of 0 dB or less mean that a human cannot perceive the quantization noise.

The bit packing unit 14 codes quantized samples belonging to each layer and additional information and packs the coded signal in a layered structure. The additional information includes scale band information, coding band information, their scale factor information, and coding model information in each layer. The scale band information and coding band information may be packed as header information and then transmitted to a decoding apparatus. Otherwise, the scale band information and coding band information may be coded and packed as additional information for each layer and then transmitted to a decoding apparatus. The scale band information and coding band information may not be transmitted to a decoding apparatus because they are pre-stored in the decoding apparatus in some cases.

More specifically, while coding additional information containing scale factor information and coding model information corresponding to a first layer, the bit packing unit 14 performs coding of the samples and information in units of symbols in order from a symbol formed with most significant bits (MSBs) down to a symbol formed with least significant bits (LSBs), referring to coding model information corresponding to the first layer. Then, in the second layer, the same process is repeatedly performed. That is, until the coding of a plurality of predetermined layers is finished, coding is performed with increasing the number of layers. In the present embodiment, the bit packing unit 14 differential-codes the scale factor information and the coding model information, and Huffman-codes the quantized samples. The layered structure of bitstreams coded according to the present invention will be explained later.

Scale band information refers to information for performing quantization more appropriately according to frequency characteristics of an audio signal. When a frequency area is divided into a plurality of bands and an appropriate scale factor is allocated to each band, the scale band information indicates a scale band corresponding to each layer. Thus, each layer belongs to at least one scale band. Each scale band has one allocated scale factor. Also, coding band information refers information for performing coding more appropriately according to frequency characteristics of an audio signal. When a frequency area is divided into a plurality of bands and an appropriate coding model is assigned to each band, the coding band information indicates a coding band corresponding to each layer. The scale bands and coding bands are empirically divided, and scale factors and coding models corresponding thereto, respectively, are determined based on the same.

FIG. 2 is a block diagram of a decoding apparatus according to a preferred embodiment of the present invention.

Referring to FIG. 2, the decoding apparatus decodes bitstreams to a target layer determined by the condition of a network, the performance of the decoding apparatus, and a user's selection such that the bitrate of a bitstream can be controlled. The decoding apparatus comprises an unpacking unit 21, an inverse quantization unit 22, and an inverse transformation unit 23.

The unpacking unit 21 unpacks bitstreams to a target layer, and decodes bitstreams in each layer. That is, additional information containing scale factor information and coding model information corresponding to each layer is decoded, and then based on the obtained coding model information, coded quantized samples belonging to the layer are decoded and the quantized samples are restored. In the present embodiment, the unpacking unit 21 differential-decodes scale factor information and coding model information and Huffman-decodes the coded quantized samples.

Meanwhile, the scale band information and coding band information are obtained from the header information of a bitstream or by decoding additional information in each layer. Alternatively, the decoding apparatus may store the scale band information and coding band information in advance. The inverse quantization unit 22 inversely quantizes and restores quantized samples in each layer according to scale factor information corresponding to the samples. The inverse transformation unit 23 frequency/time-maps the restored samples to transform the samples into PCM audio data of a time domain, and outputs the same. In the present embodiment, the inverse transformation unit 23 performs MDCT-based inverse transformation.

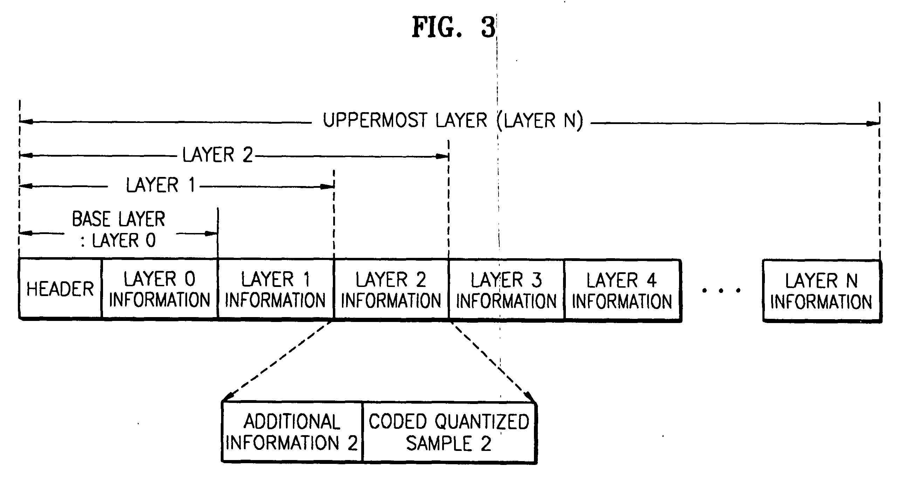

FIG. 3 is a diagram of the structure of a frame which forms a bitstream coded in a layered structure so that the bitrate can be controlled.

Referring to FIG. 3, the frame of a bitstream according to the present invention is coded by mapping quantized samples and additional information to a layered structure in order to obtain fine grain scalability (FGS). In other words, a lower layer bitstream is included in an enhancement layer bitstream in the layered structure. Additional information needed in each layer is allocated to each layer and then coded.

A header region for storing header information is placed in the front of a bitstream, then information on layer 0 is packed after the header region, and then information belonging to layers 1 through N that are enhancement layers are packed in order. A layer from the header region to layer 0 information is referred to as base layer, a layer from the header region to layer 1 information is referred to as layer 1, and a layer from the header region to layer 2 information is referred to as layer 2. Likewise, an uppermost layer indicates a layer from the header region to layer N information, that is, from the base layer to layer N that is the enhancement layer. Additional information and coded audio data are stored as each layer information. For example, additional information 2 and coded quantized samples are stored as layer 2 information. Here, N is an integer greater than or equal to 1.

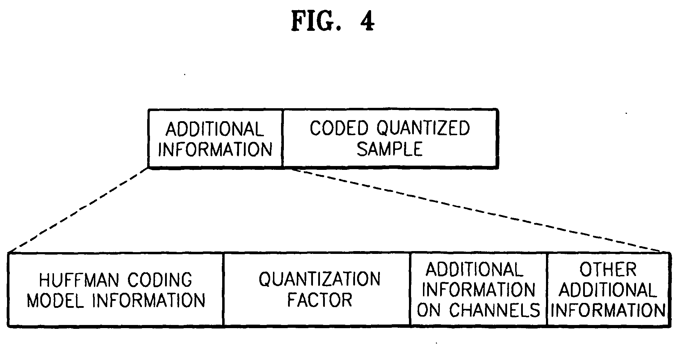

FIG. 4 is a detailed diagram of the structure of additional information.

Referring to FIG. 4, additional information and coded quantized samples are stored as arbitrary additional information, and in the present embodiment, additional information includes Huffman coding model information, quantization factor information, additional information on channels, and other additional information. The Huffman coding model information is index information on a Huffman coding model which should be used in coding or decoding quantized samples belonging to a layer corresponding to the information. Quantization factor information indicates a quantization step size for quantizing or inversely quantizing audio data belonging to a layer corresponding to the information. Additional information on channels is information on a channel such as M/S stereo. Other additional information is flag information on whether M/S stereo is employed or not.

In the present embodiment, the bit packing unit 14 performs differential coding of Huffman coding model information and quantization factor information. In the differential coding, the differential value of a value of an immediately previous band is coded. Additional information on channels is Huffman-coded.

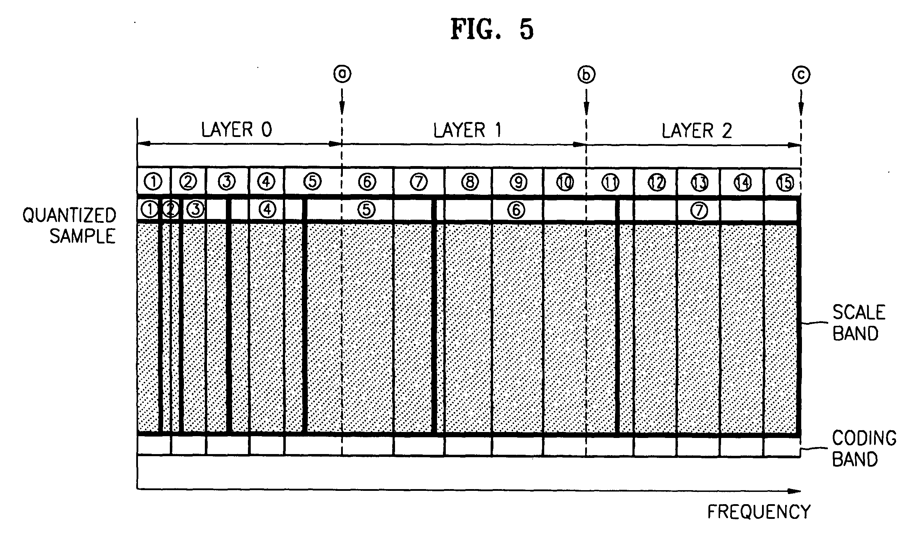

FIG. 5 is a reference diagram to explain more specifically an encoding method according to the present invention.

Referring to FIG. 5, quantized samples to be coded have a 3-layered structure. An oblique lined rectangle denotes a spectral line composed of quantized samples, solid lines indicate scale bands and dotted lines indicate coding bands. Scale bands ①, ②, ③, ④ and ⑤ and coding bands ①, ②, ③, ④ and ⑤ belong to layer 0. Scale bands ⑤ and ⑥ and coding bands ⑥, ⑦, ⑧, ⑨ and ⑩ belong to layer 1. Scale bands ⑥ and ⑦ and coding bands ⑪, ⑫, ⑬, ⑭ and ⑮ belong to layer 2. Meanwhile, layer 0 is defined such that coding is performed up to a frequency band ⓐ, layer 1 is defined such that coding is performed up to a frequency band ⓑ and layer 2 is defined such that coding is performed up to a frequency band ⓒ.

First, quantized samples belonging to layer 0 are coded within a bit range of 100 using the corresponding coding model. Also, as additional information of layer 0, the scale bands ①, ②, ③, ④ and ⑤ and coding bands ①, ②, ③, ④ and ⑤ belonging to layer 0 are coded. While coding the quantized samples in units of symbols, the number of bits are counted. If the number of bits counted exceeds the allowed bit range, coding of layer 0 is stopped and layer 1 is arithmetic-coded. Among the quantized samples belonging to layer 0, uncoded quantized samples are coded next when there is still room in the number of allowed bits in layers 0 and 1.

Next, quantized samples belonging to layer 1 are coded using a coding model of one among coding bands belonging to layer 1, that is, the coding bands ⑥, ⑦, ⑧, ⑨ and ⑩, to which quantized samples to be coded belong. Also, as additional information of layer 1, the scale bands ⑤ and ⑥ and coding bands ⑥, ⑦, ⑧, ⑨ and ⑩ belonging to layer 1 are coded. If there is still room in the allowed bit range, that is, 100 bits, even after coding all samples corresponding to layer 1, uncoded bits remaining in layer 0 are coded until the allowed bits, that is, 100 bits, are counted. If the number of bits counted for coding exceeds the allowed bit range, coding of layer 1 is stopped and coding of layer 2 is started.

Finally, quantized samples belonging to layer 2 are coded using a coding model of one among coding bands belonging to layer 2, that is, the coding bands ⑪, ⑫, ⑬, ⑭ and ⑮, to which quantized samples to be coded belong. Also, as additional information of layer 2, the scale bands ⑥ and ⑦ and coding bands ⑪, ⑫, ⑬, ⑭ and ⑮ belong to layer 2 are coded. If there is still room in the allowed bit range, that is, 100 bits, even after coding all samples corresponding to layer 2, uncoded bits remaining in layer 0 are coded until the allowed bits, that is, 100 bits, are counted.

If all the quantized samples are coded without consideration of an allowed bit range for layer 0, that is, if all the quantized samples are coded even after the number of coded bits exceeds the allowed bit range, that is, 100, which means that some of bits in an allowed bit range for the next layer, that is, layer 1, are used in coding the current layer, it is often the case that quantized samples belonging to layer 1 cannot be coded. Thus, in the case of scalable decoding, if decoding is performed on layers ranging up to layer 1, since all the quantized samples ranging up to a predetermined frequency band ⓑ corresponding to layer 1 are not coded, decoded quantized samples may fluctuate at frequencies lower than ⓑ, resulting in a "Birdy" effect in which audio quality may deteriorate.

In determining a plurality of layers (target layers), a bit range is assigned in consideration of the entire size of all audio data to be decoded. Thus, there is no possibility that coding is not performed due to a shortage in bit range in which bits to be coded are arranged.

While decoding is performed in the opposite manner to the coding process, the number of bits is counted according to the allowed bit range. Thus, a point of decoding timing of a predetermined layer can be identified.

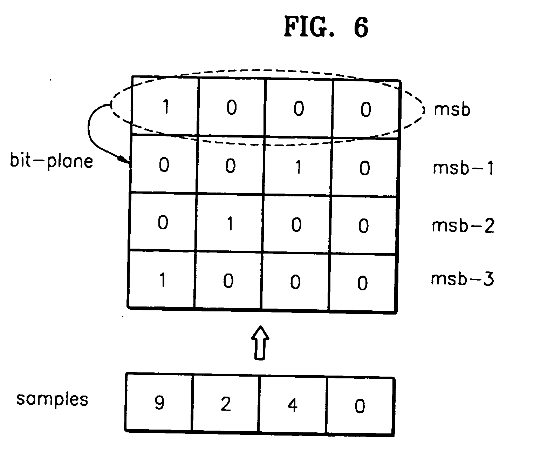

FIG. 6 is a reference diagram to explain more specifically an encoding method according to the present invention.

According to the present invention, the bit packing unit 14 performs coding on quantized samples corresponding to each layer by bit-plane coding and Huffman-coding. A plurality of quantized samples are mapped on a bit plane to then be expressed in binary form, and coded within an allowed bit range for each layer in order from a symbol formed with MSBs down to a symbol formed with LSBs. Important information on a bit plane is first coded, and relatively less important information is coded later. By doing so, a bitrate and a frequency band corresponding to each layer are fixed in the coding process so that distortion referred to as "a Birdy effect" can be reduced.

FIG. 6 illustrates an example of coding in the case where the number of bits of symbols consisting of MSBs is 4 or less. When quantized samples 9, 2, 4, and 0 are mapped on a bit plane, they are expressed in binary form, i.e., 1001b, 0010b, 0100b, and 0000b, respectively. That is, in the present embodiment, the size of a coding block which is a coding unit on a bit plane is 4*4.

A symbol formed with the MSBs, msb, is "1000b", a symbol formed with the next MSBs, msb-1, is "0010b", a symbol formed with the next MSBs, msb-2, is "0100b", and a symbol formed the LSBs, msb-3, is "1000b".

Huffman model information for Huffman coding, that is, a codebook index is as table 1:

Table 1

| Additional Information | Significance | Huffman Model |
|---|---|---|
| 0 | 0 | 0 |
| 1 | 1 | 1 |

(continued)

| Additional Information | Significance | Huffman Model |
|:---:|:---:|:---:|
| 2 | 1 | 2 |
| 3 | 2 | 3 |
|  |  | 4 |
| 4 | 2 | 5 |
|  |  | 6 |
| 5 | 3 | 7 |
|  |  | 8 |
|  |  | 9 |
| 6 | 3 | 10 |
|  |  | 11 |
|  |  | 12 |
| 7 | 4 | 13 |
|  |  | 14 |
|  |  | 15 |
|  |  | 16 |
| 8 | 4 | 17 |
|  |  | 18 |
|  |  | 19 |
|  |  | 20 |
| 9 | 5 | * |
| 10 | 6 | * |
| 11 | 7 | * |
| 12 | 8 | * |
| 13 | 9 | * |
| 14 | 10 | * |
| 15 | 11 | * |
| 16 | 12 | * |
| 17 | 13 | * |
| 18 | 14 | * |
| * | * | * |

According to the table 1, two models exist even for an identical significance level (msb in the present embodiment). This is because two models are generated for quantized samples that show different distributions.

A process for coding the example of FIG. 6 according to the table 1 will now be explained in more detail.

In the case where the number of bits of a symbol is 4 or less, Huffman coding according to the present invention is shown as equation 1:

Huffman code value

= HuffmanCodebook[codebook index][higher bit plane][symbol] ......(1)

That is, Huffman coding uses 3 input variables, including a codebook index, a higher bit plane, and a symbol. The codebook index indicates a value obtained from the table 1, the higher bit plane indicates a symbol immediately above a symbol desired to be coded at present on a bit plane. The symbol indicates a symbol desired to be coded at present.

Since the msb of the Huffman model is 4 in the example of FIG. 6, 13-16 or 17-20 are selected. If additional information to be coded is 8,
the codebook index of a symbol formed with msb bits is 16,
the codebook index of a symbol formed with msb-1 bits is 15,
the codebook index of a symbol formed with msb-2 bits is 14, and
the codebook index of a symbol formed with msb-3 bits is 13.

Meanwhile, since the symbol formed with msb bits does not have data of a higher bit plane, if the value of the higher bit plane is 0, coding is performed with a code HuffmanCodebook[16][0b][1000b]. Since the higher bit plane of the symbol formed with msb-1 bits is 1000b, coding is performed with a code HuffmanCodebook[15][1000b][0010b]. Since the higher bit plane of the symbol formed with msb-2 bits is 0010b, coding is performed with a code Huffman-Codebook[14][0010b][0100b]. Since the higher bit plane of the symbol formed with msb-3 bits is 0100b, coding is performed with a code HuffmanCodebook[13][0100b][1000b].

The bit packing unit 14 counts the number of coded bits, compares the counted number with the number of bits allowed to be used in a layer, and if the counted number is greater than the allowed number, stops the coding. When room is allowed in the next layer, the remaining bits that are not coded are coded and put in the next layer. If there is still room in the number of allowed bits in the layer after quantized samples allocated to a corresponding layer are all coded, that is, if there is room in the layer, quantized samples that remain not coded after coding in the lower layer is finished are coded.

Meanwhile, if the number of bits of a symbol formed with msb's is greater than or equal to 5, a Huffman code value is determined using a location on the current bit plane. In other words, if the significance is greater than or equal to 5, there is little statistical difference in data on each bit plane, the data is Huffman-coded using the same Huffman model. That is, a Huffman mode exists per bit plane.

If the significance is greater than or equal to 5, that is, the number of bits of a symbol is greater than or equal to 5, Huffman coding of the present invention satisfies the equation 2:

$$\text{Huffman code} = 20 + bpl \qquad \qquad \dots\dots 2$$

wherein 'bpl' indicates an index of a bit plane desired to be currently coded and is an integer greater than or equal to 1. A constant 20 is a value added for indicating that an index starts from 21 because the last index of Huffman models corresponding to additional number 8, as listed in Table 2, is 20. Therefore, additional information for a coding band simply indicates significance. In Table 2, Huffman models are determined according to the index of a bit plane desired to be currently coded.

Table 2

| Additional information | Significance | Huffman model |
|---|---|---|
| 9 | 5 | 21-25 |
| 10 | 6 | 21-26 |
| 11 | 7 | 21-27 |
| 12 | 8 | 21-28 |
| 13 | 9 | 21-29 |
| 14 | 10 | 21-30 |
| 15 | 11 | 21-31 |
| 16 | 12 | 21-32 |
| 17 | 13 | 21-33 |
| 18 | 14 | 21-34 |
| 19 | 15 | 21-35 |

For quantization factor information and Huffman model information in additional information, DPCM is performed on a coding band corresponding to the information. When quantization factor information is coded, the initial value of DPCM is expressed by 8 bits in the header information of a frame. The initial value of DPCM for Huffman model information is set to 0.

The differences between the coding method according to the present invention and the prior art BSAC technique are as follows. First, in the BSAC technique, coding is performed in units of bits, while coding is performed in units of symbols in the present invention. Secondly, in the BSAC technique, arithmetic coding is used, while Huffman coding is used in the present invention. The arithmetic coding provides a higher compression gain, but increases complexity and cost. Accordingly, in the present invention, data is coded not in units of bits but in units of symbols through the Huffman coding such that complexity and cost decreases.

**[0061]** - In order to control a bitrate, that is, in order to apply scalability, a bitstream corresponding to one frame is cut off, considering the number of bits allowed to be used in each layer such that only with a small amount of data, decoding is possible. For example, if only a bitstream corresponding to 48 kbps is desired to be decoded, only 1048 bits of a bitstream are used such that decoded audio data corresponding to 48 kbps can be obtained.

The coding and decoding methods according to the present invention based on the structure described above will now be explained.

The coding apparatus reads PCM audio data, stores the data in a memory (not shown), and obtains masking thresholds and additional information from the stored PCM audio data through psychoacoustic modeling. Since the PCM audio data is a time domain signal, the PCM audio data is wavelet-transformed into a frequency domain signal. Then, the coding apparatus obtains quantized samples by quantizing the wavelet-transformed signal according to quantization band information and quantization factor information. As described above, the quantized samples are coded and packed through bit-sliced coding, symbol unit-based coding, and Huffman coding.

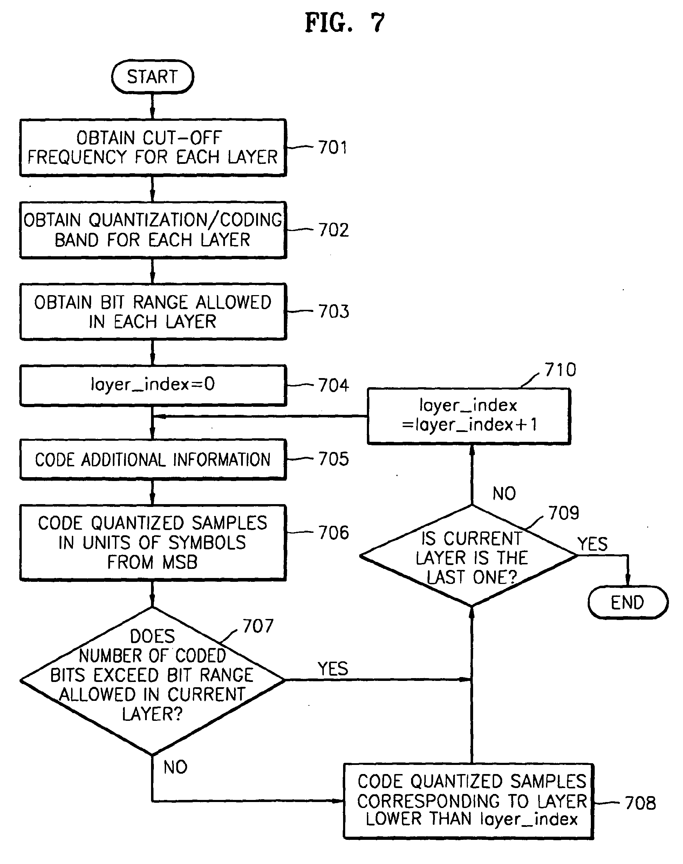

FIG. 7 is a flowchart for explaining an encoding method according to a preferred embodiment of the present invention.

Referring to FIG. 7, the process in which the bit packing unit 14 of the coding apparatus codes and packs the quantized samples will now be explained.

First, the bit packing unit 14 extracts information corresponding to each layer, based on a provided target bitrate and additional information. This process is performed in steps 701 through 703. In detail, a cut-off frequency which is a base for cut-off in each layer is obtained in step 701, quantization band information and coding band information corresponding to each layer are obtained in step 702, and a bit range within which bits that should be coded can be coded in each layer is allocated in step 703.

Then, a layer index is determined as a base layer in step 704, and additional information, including quantization band information and coding band information, is coded in step 705.

Next, quantized samples corresponding to the base layer are mapped on a bit plane, and coded in units of 4*4 blocks from the symbol formed with msb bits in step 706. The number of coded bits is counted and if the number exceeds the bit range of the current layer in step 707, then coding in the current layer is stopped and coding begins in the next layer. If the counted number of bits does not exceed the bit range in step 707, the procedure goes back to step 705 for the next layer in step 709. Since the base layer has no lower layers, step 708 is not performed, but step 708 is performed for layers following after the base layer. Through the above steps, all layers ranging until the target layer is reached are coded.

Step 706, that is, step for coding quantized samples, is as follows:

1. Quantized samples corresponding to a layer are grouped in units of N samples and mapped on a bit plane.
2. Huffman coding is performed from a symbol formed with msb bits of mapped binary data

Substep 2 can be explained in more detail as follows:

2.1 A scalar value (curVal) corresponding to a symbol desired to be coded is obtained.
2.2 A Huffman code corresponding to a scalar value (upperVal) which corresponds to a symbol in a higher bit plane, that is, a symbol that is in a higher location in the bitstream than the location of a symbol desired to be currently coded is obtained.

For quantization factor information and Huffman model information in additional information, DPCM is performed on a coding band corresponding to the information. When quantization factor information is coded, the initial value of DPCM is expressed by 8 bits in the header information of a frame. The initial value of DPCM for Huffman model information is set to 0.

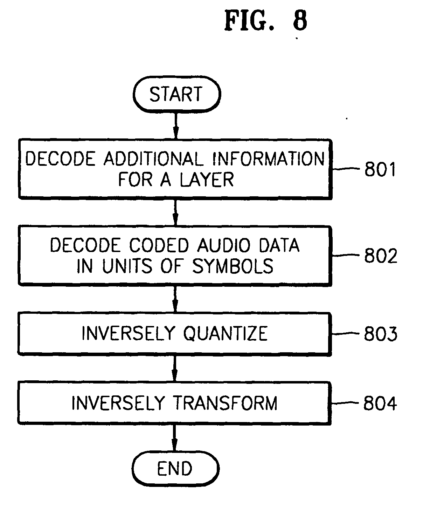

FIG. 8 is a flowchart for explaining a decoding method according to a preferred embodiment of the present invention.

Referring to FIG. 8, the decoding apparatus receives a bitstream formed with audio data that is coded in a layered structure, and decodes header information in each frame. Then, additional information, including scale factor information and coding model information corresponding to a first layer, is decoded in step 801. Referring to the coding model information, quantized samples are obtained by decoding the bitstream in units of symbols in order from a symbol formed with msb bits down to a symbol formed with LSB bits in step 802. The obtained quantized samples are inversely quantized by referring to the scale factor information in step 803, and the inversely quantized samples are inverse-transformed in step 804. Steps 801 through 804 are repeatedly performed until decoding up to a predetermined target layer is finished with increasing the ordinal number added to each layer one by one every time.

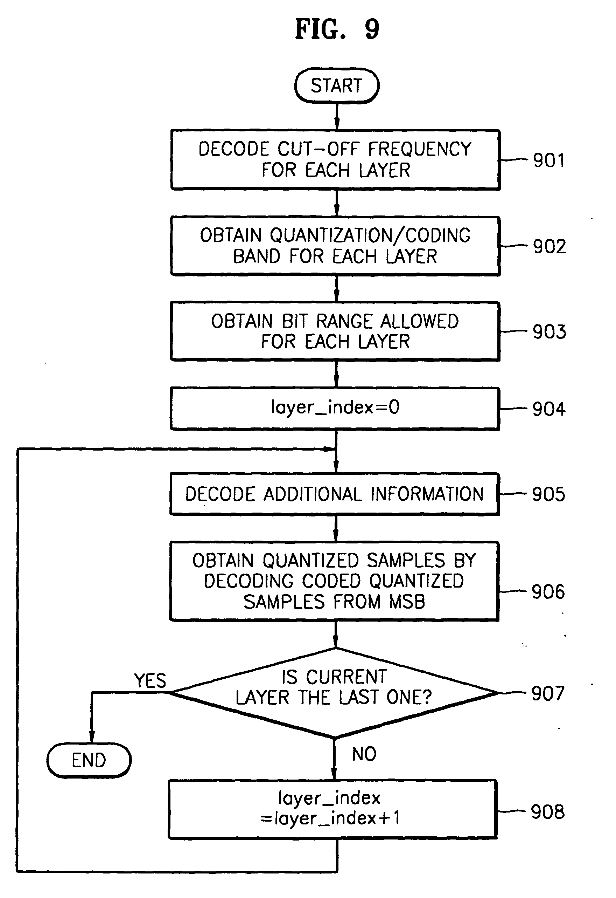

FIG. 9 is a flowchart for explaining a decoding method according to another preferred embodiment of the present invention.

Referring to FIG. 9, a bitstream formed with audio data that is coded in a layered structure is received, and a cut-off frequency corresponding to each layer is decoded from header information in each frame, in step 901. In step 902, quantization band information and coding band information corresponding to each layer are identified from the header information by decoding. In step 903, an allowed bit range to be used for each layer is identified. In step 904, a layer index is set as a base layer. Additional information on the base layer is decoded in step 905, and quantized samples are obtained by decoding the bitstream in units of symbols to the bit range allowed in each layer, in order from a symbol formed with msb bits down to a symbol formed with LSB bits in step 906. in step 907, it is checked whether the current layer is the last one. Steps 905 and 906 are repeatedly performed on layers until a predetermined target layer is reached with increasing the number of a layer one by one. In steps 901 through 903, the decoding apparatus may have in advance the cut-off frequency, quantization band information, coding band information and bit range, rather than obtaining these pieces of information from header information stored in each frame of the received bitstream. In this case, the decoding apparatus obtains the information by reading the stored information.

According to the present invention as described above, by coding the bits in units of symbols after performing the bit slicing, scalability with which a bitrate can be controlled in a top-down manner is provided such that the amount of computation by the coding apparatus is not much greater than that of an apparatus that does not provide scalability. That is, according to the present invention, there are provided a method and apparatus for coding/decoding audio data with scalability in which complexity is lower, while providing FGS, can be provided even in a lower layer.

In addition, compared to the MPEG-4 Audio BSAC technique using the arithmetic coding, the coding/encoding apparatus of the present invention using the Huffman coding reduces the amount of computation in the processes for bit packing/unpacking, down to one eighth that of the BSAC technique. Even when bit packing according to the present invention is performed in order to provide the FGS, the overhead is small such that the coding gain is similar to that when scalability is not provided.

Also, since the apparatus according to the present invention has a layered structure, the process for regenerate a bitstream so that a server side can control the bitrate is very simple, and accordingly, the complexity of an apparatus for transformation coding is low.

When an audio stream is transmitted through a network, a transmission bitrate can be controlled according to the user's selection or the network conditions such that ceaseless services can be provided.

Further, when the audio stream is stored in an information storage medium having a limited capacity, the size of a file can be controlled arbitrarily and stored. If a bitrate becomes low, the band is restricted. Accordingly, the complexity of a filter which accounts for most of the complexity of a coding/decoding apparatus decreases greatly, and the actual complexity of the coding/decoding apparatus decreases in inverse proportion to the bitrate.

**Claims**

1. A coding method comprising:

   slicing audio data so that sliced audio data corresponds to a plurality of layers; and
   obtaining (702) scale band information defining a scale factor for each of at least one scale frequency band; and
   coding each of the plurality of layers, starting with a first layer and then increasing the ordinal number by one at a time until coding for the plurality of layers is finished, wherein coding a layer comprises:

      coding (705) additional information containing scale factor information based on the scale band information for each scale frequency band of the layer and coding model information corresponding to the layer; and
      obtaining quantized samples by quantizing audio data corresponding to the layer with reference to the scale factor information; and
      coding (706) the obtained plurality of quantized samples;

**characterised by** obtaining coding band information defining the coding model information for a plurality of coding bands, corresponding to each of the plurality of layers, the coding model information being Huffman coding model information; and

wherein the step of coding (706) the obtained plurality of quantized samples includes Huffman coding the obtained plurality of quantized samples in units of symbols in order from a symbol formed with the most significant bits of the quantized samples down to a symbol formed with the least significant bits by referring to the coding model information; wherein the Huffman coding of the plurality of quantized samples comprises:

mapping a plurality K of quantized samples on a bit plane where K is an integer; and

coding (706) the samples in units of symbols within a bit range allowed in a layer corresponding to the samples in order from a symbol formed with most significant bits down to a symbol formed with least significant bits by obtaining a scalar value corresponding to the symbol formed with K-bit binary data, and performing Huffman coding by referring to the K-bit binary data the obtained scalar value, and a scalar value corresponding to a symbol formed with bits of higher significance than a current symbol on the bit plane.

2. The method of claim 1, further comprising, before the coding of each of the plurality of layers,

obtaining (703) a bit range allowed in each of the plurality of layers, wherein in the coding of the obtained plurality of quantized samples, the number of coded bits is counted, and if the number of counted bits exceeds a bit range corresponding to the bits, coding is stopped (707), and if the number of counted bits is less than the bit range corresponding to the bits even after quantized samples are all coded, bits that remain not coded after coding in a lower layer is finished are coded (708) to the extent that the bit range permits.

3. The method of claim 1 or 2, wherein the slicing of audio data comprises:

performing a wavelet transform of audio data; and

slicing the wavelet-transformed data by referring to a cut-off frequency so that the sliced data corresponds to the plurality of layers.

4. A method for decoding audio data that is coded in a layered structure, with scalability, comprising decoding each of a predetermined plurality of layers, starting with a first layer and then increasing the ordinal number of the layer by one at a time until decoding for the predetermined plurality of layers is complete, wherein decoding a layer comprises:

differential-decoding (902) additional information containing scale factor information defining a scale factor for each of at least one scale frequency band for each layer and Huffman coding model information corresponding to the layer;

Huffman-decoding (906) audio data in units of symbols in order from a symbol formed with most significant bits down to a symbol formed with least significant bits and obtaining quantized samples by referring to the coding model information;

inversely quantizing the obtained quantized samples by referring to the scale factor information;

inversely modified discrete cosine transform transforming the inversely quantized samples;

wherein the Huffman-decoding of audio data comprises:

decoding audio data in units of symbols within a bit range allowed in a layer corresponding to the audio data, in order from a symbol formed with most significant bits down to a symbol formed with least significant bits; and

obtaining the quantized samples from a bit plane on which decoded symbols are arranged; and

wherein in decoding audio data, a 4*K bit plane formed with decoded symbols is obtained, and in obtaining quantized samples, K quantized samples are obtained from the 4*K bit plane, where K is an integer.

5. An apparatus for decoding audio data that is coded in a layered structure, with scalability, comprising:

an unpacking unit (21);

an inverse quantization unit (72) which is arranged to inversely quantize obtained quantized samples by referring to the scale factor information; and

an inverse transformation unit (23) which is arranged to inverse-transform the inversely quantized samples;

**characterised in that** the unpacking unit (21) is arranged to decode additional information containing scale factor information defining a scale factor for each of at least one scale frequency band for each layer and Huffman coding model information corresponding to each layer, and by referring to the coding model information, to decode audio data in units of symbols in order from a symbol formed with most significant bits down to a symbol formed with least significant bits and to obtain the obtained quantized samples;

wherein the unpacking unit (21) is arranged to decode audio data in units of symbols within a bit range allowed in a layer corresponding to the audio data, in order from a symbol formed with most significant bits down to a symbol formed with least significant bits, and to obtain quantized samples from a bit plane on which decoded symbols are arranged; and

wherein the unpacking unit (21) is arranged to obtain a 4*K bit plane formed with decoded symbols and then, obtains K quantized samples from the 4*K bit plane, where K is an integer.

6. An apparatus for coding audio data in a layered structure, with scalability, comprising:

   a transformation unit (11) which is arranged to MDCT transform the audio data;
   a quantization unit (13) which is arranged to quantize the MDCT-transformed audio data corresponding to each layer, by referring to scale factor information defining a scale factor for each of at least one scale frequency band, and to output quantized samples; and

   **characterised by** a packing unit (14) which is arranged to differential-code additional information containing the scale factor information and Huffman coding model information corresponding to each layer, and to Huffman-code the plurality of quantized samples from the quantization unit, in units of symbols in order from a symbol formed with most significant bits down to a symbol formed with least significant bits by referring to the coding model information;
   wherein the packing unit (14) is arranged to map a plurality K of quantized samples on a bit plane where K is an integer, and to code the samples in units of symbols within a bit range allowed in a layer corresponding to the samples, in order from a symbol formed with most significant bits down to a symbol formed with least significant bits to obtain a scalar value corresponding to the symbol formed with K-bit binary data, and then to perform Huffman-coding by referring to the K-bit binary data, the obtained scalar value, and a scalar value corresponding to a symbol formed with bits of higher significance than a current symbol on the bit plane.

7. The apparatus of claim 6, wherein the packing unit (14) is arranged to obtain scale band information and coding band information corresponding to each of the plurality of layers, and to code additional information containing scale factor information and coding model information based on scale band information and coding band information corresponding to each layer.

8. The apparatus of claim 6 or 7, wherein the packing unit (14) is arranged to count the number of coded bits and if the number of counted bits exceeds a bit range corresponding to the bits, stops the coding, and if the number of counted bits is less than the bit range corresponding to the bits even after quantized samples are all coded, codes bits that remain not coded after coding in a lower layer is finished, to the extent that the bit range permits.

9. The apparatus of any one of claims 6 to 8, wherein the packing unit (14) is arranged to slice the MDCT-transformed data by referring to a cut-off frequency so that the sliced data corresponds to the plurality of layers.

**Patentansprüche**

1. Kodierverfahren umfassend:

   Slicing von Audiodaten, so dass geslicte Audiodaten einer Mehrzahl von Schichten entsprechen; und
   Ermitteln (702) von Skalenbandinformation, die einen Skalenfaktor für jedes von mindestens einem Skalenfrequenzband definiert; und
   Kodieren jeder der Mehrzahl von Schichten, beginnend mit einer ersten Schicht und dann erhöhen der Ordnungszahl jeweils um eins, bis die Kodierung für die Mehrzahl von Schichten abgeschlossen ist, wobei das Kodieren einer Schicht umfasst:

   Kodieren (705) zusätzlicher Information, die Skalenfaktorinformation basierend auf der Skalenbandinformation für jedes Skalenfrequenzband der Schicht und Kodiermodellinformation entsprechend der Schicht enthält; und

Ermitteln quantisierter Abtastungen durch Quantisieren von Audiodaten entsprechend der Schicht mit Bezug zur Skalenfaktorinformation; und

Kodieren (706) der ermittelten Mehrzahl von quantisierten Abtastungen;

**gekennzeichnet durch** Ermitteln von Kodierbandinformation, die die Kodiermodellinformation für eine Mehrzahl von Kodierbändern definiert, entsprechend jeder der Mehrzahl von Schichten, wobei die Kodiermodellinformation Huffman-Kodiermodellinformation ist;

wobei der Schritt zum Kodieren (706) der ermittelten Mehrzahl von quantisierten Abtastungen Huffman-Kodierung der ermittelten Mehrzahl von quantisierten Abtastungen in Symboleinheiten, in einer Reihenfolge von einem Symbol, das aus den signifikantesten Bits der quantisierten Abtastungen gebildet ist, zu einem Symbol, das aus den am wenigsten signifikanten Bits gebildet ist, mit Bezug zur Kodiermodellinformation beinhaltet;

wobei die Huffman-Kodierung der Mehrzahl von quantisierten Abtastungen umfasst:

Abbilden einer Mehrzahl K von quantisierten Abtastungen auf eine Bitebene, wobei K eine ganze Zahl ist; und

Kodieren (706) der Abtastungen in Symboleinheiten in einem Bitbereich, der in einer Schicht zulässig ist, entsprechend den Abtastungen in einer Reihenfolge von einem Symbol, das aus den signifikantesten Bits gebildet ist, zu einem Symbol, das aus den am wenigsten signifikanten Bits gebildet ist, indem ein skalarer Wert ermittelt wird, der dem aus K-Bit Binärdaten gebildeten Symbol entspricht, und Durchführen einer Huffman-Kodierung **durch** Bezug auf die K-Bit Binärdaten, den ermittelten skalaren Wert und einen skalaren Wert, der einem Symbol entspricht, das aus Bits höherer Signifikanz als ein aktuelles Symbol auf der Bitebene gebildet ist.

2. Verfahren nach Anspruch 1, ferner umfassend, vor dem Kodieren jeder der Mehrzahl von Schichten,

Ermitteln (703) eines Bitbereiches, der in jeder der Mehrzahl von Schichten zulässig ist, wobei beim Kodieren der ermittelten Mehrzahl von quantisierten Abtastungen die Anzahl an kodierten Bits gezählt wird, und wenn die Anzahl an gezählten Bits einen den Bits entsprechenden Bitbereich übersteigt, Stoppen der Kodierung (707), und wenn die Anzahl an gezählten Bits kleiner ist als der den Bits entsprechende Bitbereich, selbst nachdem die quantisierten Bits alle kodiert sind, Kodieren (708) von nach Abschluss des Kodierens in einer tieferen Schicht unkodiert verbleibender Bits in einem Umfang, den der Bitbereich erlaubt.

3. Verfahren nach Anspruch 1 oder 2, wobei das Slicing von Audiodaten umfasst:

Durchführen einer Wavelet-Transformation von Audiodaten; und

Slicing der wavelet-transformierten Daten durch Bezug auf eine Cutoff-Frequenz, so dass die geslicten Daten der Mehrzahl von Schichten entsprechen.

4. Verfahren zum Dekodieren von Audiodaten, die in einer Schichtstruktur kodiert sind, mit Skalierbarkeit, umfassend Dekodieren jeder einer bestimmten Mehrzahl von Schichten, beginnend mit einer ersten Schicht und dann Erhöhen der Ordnungszahl jeweils um eins, bis die Dekodierung für die bestimmte Mehrzahl von Schichten abgeschlossen ist, wobei das Dekodieren einer Schicht umfasst:

Differential-Dekodieren (902) von zusätzlicher Information, die Skalenfaktorinformation, die einen Skalenfaktor für jedes von mindestens einem Skalenfrequenzband für jede Schicht definiert, und Huffman-Kodiermodellinformation entsprechend der Schicht enthält;

Huffman-Dekodieren (906) von Audiodaten in Symboleinheiten in einer Reihenfolge von einem Symbol, das aus den signifikantesten Bits gebildet ist, zu einem Symbol, das aus den am wenigsten signifikanten Bits gebildet ist, und

Ermitteln quantisierter Abtastungen durch Bezug auf die Kodiermodellinformation;

inverses Quantisieren der ermittelten quantisierten Abtastungen mit Bezug zur Skalenfaktorinformation;

inverse modifizierte diskrete Cosinus-Transformation der invers quantisierten Abtastungen;

wobei das Huffman-Dekodieren von Audiodaten umfasst:

Dekodieren von Audiodaten in Symboleinheiten in einem Bitbereich, der in einer Schicht zulässig ist, die den Audiodaten entspricht, in einer Reihenfolge von einem Symbol, das aus den signifikantesten Bits gebildet ist, zu einem Symbol, das aus den am wenigsten signifikanten Bits gebildet ist; und

Ermitteln quantisierter Abtastungen aus einer Bitebene, auf der dekodierte Symbole angeordnet sind; und

wobei beim Dekodieren von Audiodaten eine aus dekodierten Symbolen gebildete 4*K-Bitebene ermittelt wird, und beim Ermitteln quantisierter Abtastungen K quantisierte Abtastungen aus der 4*K-Bitebene ermittelt werden, wobei K eine ganze Zahl ist.

5. Vorrichtung zum Dekodieren von Audiodaten, die in einer Schichtstruktur kodiert sind, mit Skalierbarkeit, umfassend:

eine Entpackungseinheit (21);
eine inverse Quantisierungseinheit (72), die so ausgebildet ist, dass sie ermittelte quantisierte Abtastungen mit Bezug zu einer Skalenfaktorinformation invers quantisiert; und
eine inverse Transformationseinheit (23), die so ausgebildet ist, dass sie die invers quantisierten Abtastungen invers transformiert;

**dadurch gekennzeichnet, dass** die Entpackungseinheit (21) so ausgebildet ist, dass sie zusätzliche Information dekodiert, die Skalenfaktorinformation, die einen Skalenfaktor für jedes von mindestens einem Skalenfrequenzband für jede Schicht definiert, und Huffman-Kodiermodellinformation entsprechend jeder Schicht enthält, und mit Bezug zur Kodiermodellinformation Audiodaten in Symboleinheiten in einer Reihenfolge von einem Symbol, das aus den signifikantesten Bits gebildet ist, zu einem Symbol, das aus den am wenigsten signifikanten Bits gebildet ist, dekodiert und die ermittelten quantisierten Abtastungen ermittelt;
wobei die Entpackungseinheit (21) so ausgebildet ist, dass sie Audiodaten in Symboleinheiten in einem in einer Schicht zulässigen Bitbereich entsprechend den Audiodaten in einer Reihenfolge von einem Symbol, das aus den signifikantesten Bits gebildet ist, zu einem Symbol, das aus den am wenigsten signifikanten Bits gebildet ist, dekodiert und die quantisierten Abtastungen aus einer Bitebene ermittelt, auf der dekodierte Symbole angeordnet sind; und
wobei die Entpackungseinheit (21) so ausgebildet ist, dass sie eine 4*K-Bitebene ermittelt, die aus dekodierten Symbolen gebildet ist, und dann K quantisierte Abtastungen aus der 4*K-Bitebene ermittelt, wobei K eine ganze Zahl ist.

6. Vorrichtung zum Kodieren von Audiodaten in einer Schichtstruktur, mit Skalierbarkeit, umfassend:

eine Transformationseinheit (11), die so ausgebildet ist, dass sie die Audiodaten MDCT-transformiert;
eine Quantisierungseinheit (13) , die so ausgebildet ist, dass sie die MDCT-transformierten Audiodaten entsprechend jeder Schicht mit Bezug zu einer Skalenfaktorinformation, die einen Skalenfaktor für jedes von mindestens einem Frequenzband definiert, quantisiert und die quantisierten Abtastungen ausgibt;
**gekennzeichnet durch** eine Verpackungseinheit (14), die so ausgebildet ist, dass sie zusätzliche Information differential-kodiert, die Skalenfaktorinformation und Huffman-Kodiermodellinformation enthält, die jeder Schicht entspricht, und die Mehrzahl von quantisierten Abtastungen von der Quantisierungseinheit in Symboleinheiten in einer Reihenfolge von einem Symbol, das aus den signifikantesten Bits gebildet ist, zu einem Symbol, das aus den am wenigsten signifikanten Bits gebildet ist, mit Bezug zur Kodiermodellinformation Huffman-kodiert;

wobei die Verpackungseinheit (14), so ausgebildet ist, dass sie eine Mehrzahl K von quantisierten Abtastungen auf eine Bitebene abbildet, wobei K eine ganze Zahl ist, und die Abtastungen in Symboleinheiten in einem in einer Schicht zulässigen Bitbereich entsprechend den Abtastungen in einer Reihenfolge von einem Symbol, das aus den signifikantesten Bits gebildet ist, zu einem Symbol, das aus den am wenigsten signifikanten Bits gebildet ist, kodiert, so dass ein skalarer Wert ermittelt wird, der dem aus K-Bit Binärdaten gebildeten Symbol entspricht, und dann eine Huffman-Kodierung mit Bezug zu den K-Bit Binärdaten, dem ermittelten skalaren Wert und einem skalaren Wert durchführt, der einem Symbol entspricht, das aus Bits höherer Signifikanz als ein aktuelles Symbol auf der Bitebene gebildet ist.

7. Vorrichtung nach Anspruch 6, wobei die Verpackungseinheit (14), so ausgebildet ist, dass sie Skalenbandinformation und Kodierbandinformation entsprechend jeder der Mehrzahl von Schichten ermittelt und zusätzliche Information kodiert, die Skalenfaktorinformation und Kodiermodellinformation basierend auf Skalenbandinformation und Kodierbandinformation entsprechend jeder Schicht enthält.

8. Vorrichtung nach Anspruch 6 oder 7, wobei die Verpackungseinheit (14), so ausgebildet ist, dass sie die Anzahl an kodierten Bits zählt, und wenn die Anzahl an gezählten Bits einen den Bits entsprechenden Bitbereich übersteigt, die Kodierung stoppt, und wenn die Anzahl an gezählten Bits kleiner ist als der den Bits entsprechende Bitbereich, selbst nachdem die quantisierten Bits alle kodiert sind, nach Abschluss des Kodierens in einer tieferen Schicht unkodiert verbleibende Bits in einem Umfang kodiert, den der Bitbereich erlaubt.

**9.** Vorrichtung nach einem der Ansprüche 6 bis 8, wobei die Verpackungseinheit (14), so ausgebildet ist, dass sie die MDCT-transformierten Daten mit Bezug zu einer Cutoff-Frequenz slict, so dass die geslicten Daten der Mehrzahl an Schichten entsprechen.

**Revendications**

**1.** Méthode de codage comprenant :

le découpage de données audio de sorte que des données audio découpées correspondent à une pluralité de couches ; et
l'obtention (702) d'informations de bande d'extension définissant un facteur d'extension pour chaque bande d'au moins une bande de fréquence d'extension ; et
le codage de chaque couche de la pluralité de couches, commençant par une première couche puis augmentant le nombre ordinal d'un à la fois jusqu'à la fin du codage de la pluralité de couches, le codage d'une couche comprenant :

le codage (705) d'informations supplémentaires contenant des informations de facteur d'extension basées sur les informations de bande d'extension pour chaque bande de fréquence d'extension de la couche et des informations de modèle de codage correspondant à la couche ; et
l'obtention d'échantillons quantifiés en quantifiant les données audio correspondant à la couche en référence aux informations de facteur d'extension ; et
le codage (706) de la pluralité obtenue d'échantillons quantifiés;

**caractérisée par** l'obtention d'informations de bande de codage définissant les informations de modèle de codage pour une pluralité de bandes de codage, correspondant à chaque couche de la pluralité de couches, les informations de modèle de codage étant des informations de modèle de codage de Huffman ; et
dans laquelle l'étape de codage (706) de la pluralité obtenue d'échantillons quantifiés comprend le codage de Huffman de la pluralité obtenue d'échantillons quantifiés en unités de symboles dans l'ordre à partir d'un symbole formé avec les bits les plus significatifs des échantillons quantifiés jusqu'à un symbole formé avec les bits les moins significatifs en se rapportant aux informations de modèle de codage ;
dans laquelle le codage de Huffman de la pluralité d'échantillons quantifiés comprend :

la représentation d'une pluralité K d'échantillons quantifiés sur un plan binaire où K est un entier ; et
le codage (706) des échantillons en unités de symboles dans une plage binaire autorisée dans une couche correspondant aux échantillons dans l'ordre à partir d'un symbole formé avec les bits les plus significatifs jusqu'à un symbole formé avec les bits les moins significatifs en obtenant une valeur scalaire correspondant au symbole formé avec les données binaires K-bits, et en effectuant un codage de Huffman en se rapportant aux données binaires K-bits, à la valeur scalaire obtenue et à une valeur scalaire correspondant à un symbole formé avec des bits d'importance supérieure à un symbole en cours sur le plan binaire.

**2.** Méthode selon la revendication 1, comprenant en outre, avant le codage de chaque couche de la pluralité de couches,

l'obtention (703) d'une plage binaire autorisée dans chaque couche de la pluralité de couches, dans laquelle, lors du codage de la pluralité obtenue d'échantillons quantifiés, le nombre de bits codés est compté, et si le nombre de bits comptés dépasse une plage binaire correspondant aux bits, le codage est arrêté (707), et si le nombre de bits comptés est inférieur à la plage binaire correspondant aux bits même après le codage de tous les échantillons quantifiés, les bits qui demeurent non codés après la fin du codage dans une couche inférieure sont codés (708) dans la mesure où la plage binaire le permet.

**3.** Méthode selon la revendication 1 ou 2, dans laquelle le découpage de données audio comprend :

la réalisation d'une transformée en ondelettes de données audio ; et
le découpage des données transformées en ondelettes en se rapportant à une fréquence de coupure de sorte que les données découpées correspondent à la pluralité de couches.

**4.** Méthode pour le décodage de données audio qui sont codées dans une structure en couches, avec extensibilité, comprenant le décodage de chaque couche d'une pluralité prédéterminée de couches, en commençant par une première couche puis en augmentant le nombre ordinal de la couche d'un à la fois jusqu'à la fin du décodage de la pluralité prédéterminée de couches, le décodage d'une couche comprenant :

le décodage de façon différentielle (902) d'informations supplémentaires contenant des informations de facteur d'extension définissant un facteur d'extension pour chaque bande d'au moins une bande de fréquence d'extension pour chaque couche et des informations de modèle de Huffman correspondant à la couche ;

le décodage selon Huffman (906) de données audio en unités de symboles dans l'ordre à partir d'un symbole formé avec les bits les plus significatifs jusqu'à un symbole formé avec les bits les moins significatifs et l'obtention d'échantillons quantifiés en se rapportant aux informations de modèle de codage ;

la quantification inverse des échantillons quantifiés obtenus en se rapportant aux informations de facteur d'extension ;

la transformée en cosinus discrète modifiée inverse des échantillons quantifiés de manière inverse ;

dans laquelle le décodage selon Huffman de données audio comprend :

le décodage de données audio en unités de symboles dans une plage binaire autorisée dans une couche correspondant aux données audio, dans l'ordre à partir d'un symbole formé avec les bits les plus significatifs jusqu'à un symbole formé avec les bits les moins significatifs ; et

l'obtention des échantillons quantifiés à partir d'un plan binaire sur lequel sont agencés des symboles décodés; et

dans laquelle, lors du décodage de données audio, un plan binaire 4*K formé avec les symboles décodés est obtenu, et lors de l'obtention d'échantillons quantifiés, K échantillons quantifiés sont obtenus à partir du plan binaire 4*K, où K est un entier.

5. Dispositif de décodage de données audio qui sont codées dans une structure en couches, avec extensibilité, comprenant :

une unité de décompression (21) ;

une unité de quantification inverse (72) qui est agencée pour quantifier de manière inverse les échantillons quantifiés obtenus en se rapportant aux informations de facteur d'extension ; et

une unité de transformation inverse (23) qui est agencée pour transformer de manière inverse les échantillons quantifiés de manière inverse ;

**caractérisé en ce que** l'unité de décompression (21) est agencée pour décoder des informations supplémentaires contenant des informations de facteur d'extension définissant un facteur d'extension pour chaque bande d'au moins une bande de fréquence d'extension pour chaque couche et des informations de modèle de codage de Huffman correspondant à chaque couche, et en se rapportant aux informations de modèle de codage, pour décoder les données audio en unités de symboles dans l'ordre à partir d'un symbole formé avec les bits les plus significatifs jusqu'à un symbole formé avec les bits les moins significatifs pour obtenir les échantillons quantifiés obtenus ;

dans lequel l'unité de décompression (21) est agencée pour décoder des données audio en unité de symboles dans une plage binaire autorisée dans une couche correspondant aux données audio, dans l'ordre à partir d'un symbole formé avec les bits les plus significatifs jusqu'à un symbole formé avec les bits les moins significatifs, et pour obtenir des échantillons quantifiés à partir d'un plan binaire sur lequel sont agencés les symboles décodés ; et

dans lequel l'unité de décompression (21) est agencée pour obtenir un plan binaire 4*K formé avec des symboles décodés puis, obtient K échantillons quantifiés à partir du plan binaire 4*K, où K est un entier.

6. Dispositif de codage de données audio dans une structure en couches, avec extensibilité, comprenant :

une unité de transformation (11) qui est agencée pour transformer en MDCT les données audio ;

une unité de quantification (13) qui est agencée pour quantifier les données audio transformées en MDCT correspondant à chaque couche, en se rapportant aux informations de facteur d'extension définissant un facteur d'extension pour chaque bande d'au moins une bande de fréquence d'extension, et pour sortir des échantillons quantifiés ; et

**caractérisé par** une unité de compression (14) qui est agencée pour coder de manière différentielle des informations supplémentaires contenant les informations de facteur d'extension et les informations de modèle de codage de Huffman correspondant à chaque couche, et pour coder selon Huffman la pluralité d'échantillons quantifiés à partir de l'unité de quantification, en unités de symboles, dans l'ordre à partir d'un symbole formé avec les bits les plus significatifs jusqu'à un symbole formé avec les bits les moins significatifs en se rapportant aux informations de modèle de codage ;

dans lequel l'unité de compression (14) est agencée pour représenter une pluralité K d'échantillons quantifiés sur un plan binaire où K est un entier, et pour coder les échantillons en unités de symboles dans une plage binaire autorisée correspondant aux échantillons, dans l'ordre à partir d'un symbole formé avec les bits les plus significatifs jusqu'à un symbole formé avec les bits les moins significatifs pour obtenir une valeur scalaire correspondant au symbole formé avec les données binaires K bits, puis pour effectuer le codage de Huffman en se rapportant aux données binaires K bits, à la valeur scalaire obtenue, et à une valeur scalaire correspondant à un symbole formé avec des bits d'importance supérieure à un symbole en cours sur le plan binaire.

7. Dispositif selon la revendication 6, dans lequel l'unité de compression (14) est agencée pour obtenir des informations de bande d'extension et des informations de bande de codage correspondant à chaque couche de la pluralité de couches, et pour coder des informations supplémentaires contenant des informations de facteur d'extension et des informations de modèle de codage sur la base des informations de bande d'extension et des informations de bande de codage correspondant à chaque couche.

8. Dispositif selon la revendication 6 ou 7, dans lequel l'unité de compression (14) est agencée pour compter le nombre de bits codés et si le nombre de bits comptés dépasse une plage binaire correspondant aux bits, arrête le codage, et si le nombre de bits comptés est inférieur à la plage binaire correspondant aux bits même après le codage de tous les échantillons quantifiés, code les bits qui demeurent non codés après la fin du codage dans une couche inférieure, dans la mesure où la plage binaire le permet.

9. Dispositif selon l'une quelconque des revendications 6 à 8, dans lequel l'unité de compression (14) est agencée pour découper les données transformées en MDCT en se rapportant à une fréquence de coupure de sorte que les données découpées correspondent à la pluralité de couches.

# FIG. 1

PCM AUDIO DATA → TRANSFORMATION UNIT (11) → QUANTIZATION UNIT (13) → BIT PACKING UNIT (14) → BITSTREAM

PSYCHOACOUSTIC UNIT (12)

# FIG. 2

BIT STREAM → UNPACKING UNIT (21) → INVERSE QUANTIZATION UNIT (22) → INVERSE TRANSFORMATION UNIT (23) → PCM AUDIO DATA

## FIG. 3

FIG. 4

| ADDITIONAL INFORMATION | CODED QUANTIZED SAMPLE |
|---|---|

| HUFFMAN CODING MODEL INFORMATION | QUANTIZATION FACTOR | ADDITIONAL INFORMATION ON CHANNELS | OTHER ADDITIONAL INFORMATION |
|---|---|---|---|

# FIG. 5

LAYER 0     LAYER 1     LAYER 2

ⓐ   ⓑ   ⓒ

QUANTIZED SAMPLE

SCALE BAND

CODING BAND

FREQUENCY

EP 1 431 963 B1

# FIG. 6

bit-plane

|   |   |   |   | |
|---|---|---|---|---|
| 1 | 0 | 0 | 0 | msb |
| 0 | 0 | 1 | 0 | msb−1 |
| 0 | 1 | 0 | 0 | msb−2 |
| 1 | 0 | 0 | 0 | msb−3 |

⇧

samples

| 9 | 2 | 4 | 0 |
|---|---|---|---|

# FIG. 7

START

OBTAIN CUT-OFF FREQUENCY FOR EACH LAYER — 701

OBTAIN QUANTIZATION/CODING BAND FOR EACH LAYER — 702

OBTAIN BIT RANGE ALLOWED IN EACH LAYER — 703

layer_index=0 — 704

layer_index =layer_index+1 — 710

CODE ADDITIONAL INFORMATION — 705

CODE QUANTIZED SAMPLES IN UNITS OF SYMBOLS FROM MSB — 706

IS CURRENT LAYER IS THE LAST ONE? — 709

NO

YES

END

DOES NUMBER OF CODED BITS EXCEED BIT RANGE ALLOWED IN CURRENT LAYER? — 707

YES

NO

CODE QUANTIZED SAMPLES CORRESPONDING TO LAYER LOWER THAN layer_index — 708

# FIG. 8

```
          START
            │
            ▼
┌──────────────────────────┐
│ DECODE ADDITIONAL INFORMATION │── 801
│       FOR A LAYER            │
└──────────────────────────┘
            │
            ▼
┌──────────────────────────┐
│   DECODE CODED AUDIO DATA    │── 802
│     IN UNITS OF SYMBOLS      │
└──────────────────────────┘
            │
            ▼
┌──────────────────────────┐
│    INVERSELY QUANTIZE        │── 803
└──────────────────────────┘
            │
            ▼
┌──────────────────────────┐
│    INVERSELY TRANSFORM       │── 804
└──────────────────────────┘
            │
            ▼
           END
```

# FIG. 9

START

DECODE CUT-OFF FREQUENCY
FOR EACH LAYER — 901

OBTAIN QUANTIZATION/CODING
BAND FOR EACH LAYER — 902

OBTAIN BIT RANGE ALLOWED
FOR EACH LAYER — 903

layer_index=0 — 904

DECODE ADDITIONAL INFORMATION — 905

OBTAIN QUANTIZED SAMPLES BY
DECODING CODED QUANTIZED
SAMPLES FROM MSB — 906

IS CURRENT
LAYER THE LAST ONE? — 907

YES

END

NO

layer_index
=layer_index+1 — 908

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 9761298

• KR 261253

**Non-patent literature cited in the description**

• **SUNG-HEE PARK et al.** Multi-Layer Bit-Sliced Bit-Rate Scalable Audio Coding. *Preprints of the AES Convention,* 1997, vol. 103, 1-16